# EUROPEAN PATENT APPLICATION

(11) **EP 4 729 372 A1**
(43) Date of publication of application: **22.04.2026**
(21) Application number: 23941283.6
(22) Date of filing: 25.10.2023
(51) Int. Cl.: B60S 5/06, B60L 53/80

(54) **ATTITUDE ADJUSTMENT METHOD, ATTITUDE ADJUSTMENT APPARATUS, CONTROL DEVICE, AND STORAGE MEDIUM**

(30) Priority: 13.06.2023 CN 202310696526
(71) Applicant: Contemporary Amperex Technology Co., Limited, Ningde, Fujian 352100 (CN)
(72) Inventor: WU, Kai, Ningde, Fujian 352100 (CN); CHAN, Libing, Ningde, Fujian 352100 (CN)
(74) Representative: Ran, Handong
(86) International application number: PCT/CN2023/126557
(87) International publication number: WO 2024/255059

(57) **Abstract**

An attitude adjustment method, comprising: controlling a battery-swapping device to move to a projection area of a battery to be swapped of a target device on the ground; acquiring attitude information of said battery by means of a distance-measuring sensor on the battery-swapping device; and adjusting the attitude of the battery-swapping device according to the attitude information of said battery until the attitude of the battery-swapping device is matched with the attitude information of said battery. The solution of the present application is conducive to implementing compatible swapping of batteries of different electric vehicles in a battery-swapping station. In addition, the present application further relates to an attitude adjustment apparatus, a control device, and a storage medium.

## Description

This application claims priority to Chinese Patent Application No. 202310696526.7, filed with the China National Intellectual Property Administration on June 13, 2023 and entitled "POSTURE ADJUSTMENT METHOD, POSTURE ADJUSTMENT APPARATUS, CONTROL DEVICE, AND STORAGE MEDIUM," which is incorporated herein by reference in its entirety.

### TECHNICAL FIELD

This application pertains to the field of battery swapping technologies, and in particular, to a posture adjustment method, a posture adjustment apparatus, a control device, and a computer-readable storage medium.

### BACKGROUND

To ensure the endurance of electric vehicles, battery swapping has become a mainstream energy supply means. However, batteries in different electric vehicles often present posture differences due to various external factors, which poses certain challenges for battery swapping operations at battery swapping stations for different electric vehicles.

### SUMMARY

This application provides a posture adjustment method, a posture adjustment apparatus, a control device, and a computer-readable storage medium, so as to facilitate compatible battery replacement for different electric vehicles at a battery swapping station.

According to a first aspect, this application provides a posture adjustment method, including:
controlling a battery swapping device to move to a projection area on the ground of a to-be-swapped battery of target equipment;
acquiring posture information of the to-be-swapped battery via a ranging sensor on the battery swapping device; and
adjusting a posture of the battery swapping device based on the posture information of the to-be-swapped battery until the posture of the battery swapping device matches the posture information of the to-be-swapped battery.

According to a second aspect, this application provides a posture adjustment apparatus, including:
a moving module, configured to control a battery swapping device to move to a projection area on the ground of a to-be-swapped battery of target equipment;
an acquisition module, configured to acquire posture information of the to-be-swapped battery via a ranging sensor on the battery swapping device; and
an adjustment module, configured to adjust a posture of the battery swapping device based on the posture information of the to-be-swapped battery until the posture of the battery swapping device matches the posture information of the to-be-swapped battery.

According to a third aspect, this application provides a control device, where the control device includes a memory, a processor, and a computer program stored in the memory and capable of running on the processor, and when the computer program is executed by the processor, the method according to the first aspect is implemented.

According to a fourth aspect, this application provides a computer-readable storage medium, where the computer-readable storage medium stores a computer program, and when the computer program is executed by a processor, the method according to the first aspect is implemented.

According to a fifth aspect, this application provides a computer program product, where the computer program product includes a computer program, and when the computer program is executed by one or more processors, the method according to the first aspect is implemented.

Compared with the prior art, this application has the following beneficial effects. For accurate swapping operations on batteries with different postures, in this application, a battery swapping device may first be controlled to move to a projection area on the ground of a to-be-swapped battery of target equipment, so that the battery swapping device is positioned directly below the to-be-swapped battery. In this way, a ranging sensor on the battery swapping device can effectively observe the to-be-swapped battery from directly below, thereby acquiring the posture information of the to-be-swapped battery. Finally, as described in this application, the posture of the battery swapping device is adjusted based on the posture information of the to-be-swapped battery, so that the posture of the battery swapping device can match the posture information of the to-be-swapped battery, that is, the posture of the battery swapping device matches the posture of the to-be-swapped battery. When their postures match, the battery swapping device can smoothly dock with the to-be-swapped battery, achieving rapid removal and replacement of the to-be-swapped battery. Through the foregoing process, regardless of the posture of the to-be-swapped battery on the target equipment, the battery swapping device of the battery swapping station can perform replacement operations, achieving compatible battery replacement for different electric vehicles.

It can be understood that: the beneficial effects of the second aspect to the fifth aspect are described in the first aspect and are not repeated here.

### BRIEF DESCRIPTION OF DRAWINGS

To describe the technical solutions in the of this application or the prior art more clearly, the following briefly describes the accompanying drawings required for describing the embodiments or the prior art. Apparently, the accompanying drawings in the following description show merely some of the embodiments of this application, and a person of ordinary skill in the art may still derive other drawings from these accompanying drawings without creative efforts.
FIG. 1 is a schematic flowchart of a posture adjustment method according to an embodiment of this application;
FIG. 2 is a schematic diagram of acquiring posture information of a to-be-swapped battery via a ranging sensor in the posture adjustment method according to an embodiment of this application;
FIG. 3 is a block diagram of a posture adjustment apparatus according to an embodiment of this application; and
FIG. 4 is a schematic structural diagram of a control device according to an embodiment of this application.

### DESCRIPTION OF EMBODIMENTS

The following describes in detail the embodiments of technical solutions of this application with reference to the accompanying drawings. The following embodiments are merely intended for a clearer description of the technical solutions of this application and therefore are just used as examples which do not constitute any limitations on the protection scope of this application.

Unless otherwise defined, all technical and scientific terms used herein shall have the same meanings as commonly understood by those skilled in the art to which this application belongs. The terms used herein are intended to merely describe the specific embodiments rather than to limit this application. The terms "include", "comprise", and "have" and any other variations thereof in the specification, claims and brief description of drawings of this application are intended to cover non-exclusive inclusions.

In the description of some embodiments of this application, the terms "first", "second" and the like are merely intended to distinguish between different objects, and shall not be understood as any indication or implication of relative importance or any implicit indication of the number, sequence or primary-secondary relationship of the technical features indicated.

In this specification, reference to "embodiment" means that specific features, structures or characteristics described with reference to the embodiment may be incorporated in at least one embodiment of this application. The word "embodiment" appearing in various places in the specification does not necessarily refer to the same embodiment, or an independent or alternative embodiment that is exclusive of other embodiments. It is explicitly or implicitly understood by persons skilled in the art that the embodiments described herein may be combined with other embodiments.

In the description of some embodiments of this application, the term "and/or" is only an associative relationship for describing associated objects, indicating that three relationships may be present. For example, A and/or B may indicate the following three cases: presence of A, presence of both A and B, and presence of B. In addition, a character "/" in this specification generally indicates "or" relationship between contextually associated objects.

In the description of some embodiments of this application, the term "a plurality of" means at least two unless otherwise specifically stated.

At present, batteries have been more widely used in energy storage power supply systems such as hydroelectric power plants, thermal power plants, wind power plants, and solar power plants, electric transportation tools such as electric bicycles, electric motorcycles, and electric vehicles, and even military equipment, and aerospace. With the continuous widespread of battery application, market demand is also constantly increasing.

For energy supply of batteries in electric vehicles, in addition to the traditional plug-in charging mode, a battery swapping mode has been developed in recent years. Considering that the time required for battery swapping is significantly shorter than that for charging, and the batteries used in swapping are typically leased, the battery swapping mode is superior in terms of convenience and cost compared to the plug-in charging mode, making the former widely noticed.

However, due to differences in design of different electric vehicles, their batteries often present posture differences. Moreover, even for the same electric vehicle, different load conditions can lead to different vehicle postures (for example, an electric heavy truck exhibits different tilt angles under full load and no load), resulting in different battery postures. That is, the posture of an electric vehicle's battery varies depending on the vehicle model and load condition, posing certain challenges for swapping batteries of electric vehicles at battery swapping stations.

In view of this, an embodiment of this application proposes a posture adjustment method. After the battery swapping device moves to the projection area on the ground of the to-be-swapped battery, it does not immediately start the battery swapping operation but first acquires the posture information of the to-be-swapped battery in space. Based on the posture information, the battery swapping device adjusts its own posture to ultimately match the posture information of the to-be-swapped battery, thereby ensuring smooth docking between the battery swapping device and the to-be-swapped battery for rapid removal and replacement. To illustrate the technical solution proposed by the embodiments of this application, the following description is provided through specific embodiments.

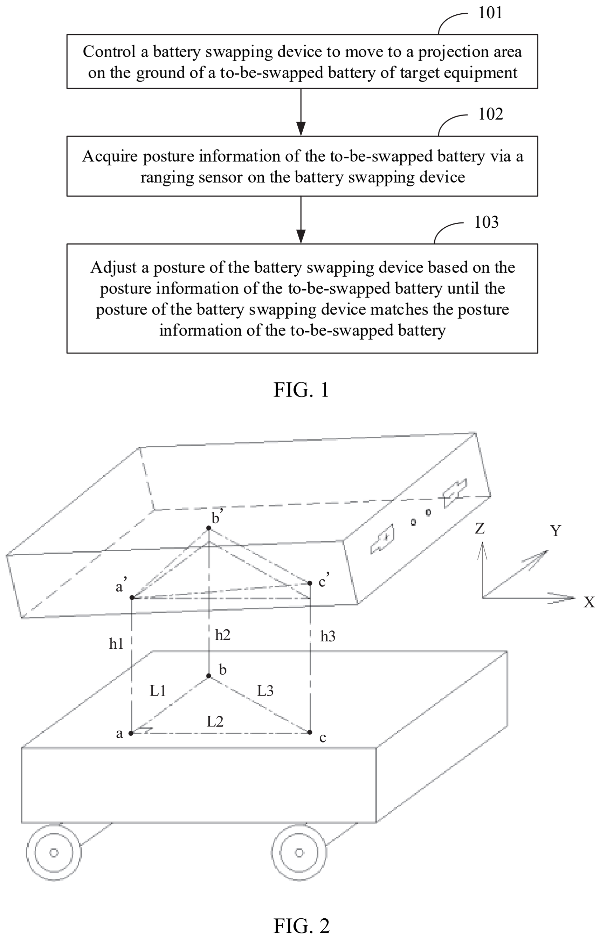

A posture adjustment method provided by an embodiment of this application is described below. The posture adjustment method can be applied to a control device. As an example only, the control device may include but is not limited to a non-independent device integrated into the battery swapping device or an independent device in communication connection with the battery swapping device. Referring to FIG. 1, the posture adjustment method in this embodiment of this application includes the following steps.

Step 101. Control a battery swapping device to move to a projection area on the ground of a to-be-swapped battery of target equipment.

The target equipment refers to a device currently requiring battery replacement, that is, a device whose battery is currently at a low power level. As an example only, in a battery swapping station for electric vehicles, when an electric vehicle enters the station, the electric vehicle is the target equipment, and its battery is the to-be-swapped battery.

Since batteries are generally heavy, battery swapping operations often rely on mechanical battery swapping devices. As an example only, a common type of battery swapping device is a battery swapping cart, such as a rail guide vehicle (Rail Guide Vehicle, RGV). When the target equipment is parked at a designated battery swapping position in the battery swapping station, the control device can control the battery swapping device to move to the projection area on the ground of the to-be-swapped battery. Specifically, this projection area refers to the orthographic projection area of the to-be-swapped battery on the ground. Therefore, it can be understood that the projection area on the ground of the to-be-swapped battery refers to the area directly below the to-be-swapped battery.

In some embodiments, during the movement of the battery swapping device to the orthographic projection area of the to-be-swapped battery on the ground, the battery swapping device can perform real-time positioning, and its positioning result indicates the orthographic projection area of the battery swapping device on the ground. In this way, the control device can determine whether the overlap rate between the orthographic projection area of the battery swapping device on the ground and the orthographic projection area of the to-be-swapped battery on the ground satisfies a predetermined arrival condition. Once the arrival condition is met, it is considered that the battery swapping device has essentially moved to the projection area on the ground of the to-be-swapped battery, and the control device can control the battery swapping device to stop moving, stabilizing it in the projection area on the ground of the to-be-swapped battery. Considering factors such as command transmission delay and inertia, as an example only, the arrival condition may be that the overlap rate reaches a predetermined overlap rate threshold, for example, 80%.

Step 102. Acquire posture information of the to-be-swapped battery via a ranging sensor on the battery swapping device.

When the battery swapping device is stabilized in the projection area on the ground of the to-be-swapped battery, the control device can trigger the battery swapping device to detect the posture of the to-be-swapped battery, thereby acquiring the posture information of the to-be-swapped battery. The posture detection may specifically be implemented by sensors mounted on the battery swapping device.

As an example only, the sensors include, but are not limited to, visual sensors and ranging sensors; where the visual sensors may include binocular cameras or depth cameras, and the ranging sensors may include infrared ranging sensors, laser ranging sensors, or ultrasonic ranging sensors. This embodiment of this application does not limit the type of sensor.

Step 103. Adjust a posture of the battery swapping device based on the posture information of the to-be-swapped battery until the posture of the battery swapping device matches the posture information of the to-be-swapped battery.

After acquiring the posture information of the to-be-swapped battery, the control device can control the battery swapping device to adjust its own posture, with the aim of making the posture of the battery swapping device match the posture information of the to-be-swapped battery, that is, making the posture of the battery swapping device match the posture of the to-be-swapped battery. Specifically, the control device can generate corresponding posture adjustment instructions based on the difference between the posture information of the to-be-swapped battery and the initial posture of the battery swapping device, and adjust the posture of the battery swapping device based on these posture adjustment instructions until the posture of the battery swapping device matches the posture of the to-be-swapped battery.

It can be understood that when the posture of the battery swapping device matches the posture of the to-be-swapped battery, it can be considered that the battery swapping device is aligned with the to-be-swapped battery, that is, the battery swapping device has completed the preparation for battery swapping. At this point, the battery swapping device can begin docking with the to-be-swapped battery based on its current posture and remove mounting components such as bolts of the to-be-swapped battery, thereby smoothly removing the to-be-swapped battery from the target equipment.

Further, when the to-be-swapped battery is successfully removed, and the battery swapping device has retrieved a new battery, the battery swapping device can continue to mount the new battery based on the posture it had when removing the to-be-swapped battery. That is, the control device can record the posture information of the battery swapping device matching the posture information of the to-be-swapped battery, and subsequently, whether removing the to-be-swapped battery or mounting a new battery for the current target equipment, the battery swapping device can be controlled to operate based on the recorded posture information.

In some embodiments, it can be understood that the form of the battery swapping device typically resembles an approximate cuboid. Based on this equipment form, for accurate posture detection of the to-be-swapped battery, the ranging sensor may be arranged on a plane other than the lower plane of the battery swapping device, as long as it is ensured that the ranging device is not obstructed by other equipment components. As an example only, when there is only one ranging sensor, it may be arranged on the upper plane of the battery swapping device or a side plane of the ranging device; when there are two or more ranging sensors, they may all be arranged on the upper plane, all on the side plane, or some on the upper plane and some on the side plane of the battery swapping device. When the control device determines, based on the positioning result of the battery swapping device, that the battery swapping device has moved to the projection area on the ground of the to-be-swapped battery, the control device can trigger the ranging sensor to start operating.

In some embodiments, considering that the form of the battery also typically resembles an approximate cuboid, the posture information of the target to-be-swapped battery of the control device can be equivalent to the posture information of the lower plane of the to-be-swapped battery. In some examples, this posture information can be expressed through a posture angle, and the posture angle of the lower plane of the to-be-swapped battery can be considered as the posture angle of the to-be-swapped battery; where the posture angle of the lower plane of the to-be-swapped battery specifically refers to the angle between the lower plane of the to-be-swapped battery and the upper plane of the initial battery swapping device. That is, in this embodiment of this application, the posture information of the to-be-swapped battery includes the angle between the lower plane of the to-be-swapped battery and the upper plane of the initial battery swapping device.

According to geometric knowledge, three points determine a plane. Therefore, in this embodiment of this application, the control device needs to obtain at least three ranging points on the lower plane of the to-be-swapped battery via the ranging sensor, so as to accurately acquire the posture information of the lower plane of the to-be-swapped battery, that is, the posture information of the to-be-swapped battery.

In one application scenario, to reduce the computational load during posture detection, at least three ranging sensors may be arranged on the upper plane of the battery swapping device, and a measurement direction of each of the ranging sensors is perpendicular to the upper plane of the battery swapping device. That is, each ranging sensor measures upward perpendicular to the upper plane of the battery swapping device. To ensure that the obtained ranging points can form a plane, any three of these at least three ranging sensors may not be collinear. Additionally, to ensure the accuracy of the measurement results, the ranging sensors used may be of the same model, with a measurement error on the millimeter level. Using the ranging sensors arranged in this manner, the control device can measure the posture of the to-be-swapped battery as follows.

A1. Obtain at least three ranging values by using the ranging sensors to measure the lower plane of the to-be-swapped battery.

Generally, by default, the upper plane of the battery swapping device is parallel or nearly parallel to the ground. Since the battery swapping device has moved to the projection area on the ground of the to-be-swapped battery, and the ranging sensors measure upward perpendicular to the upper plane of the battery swapping device, the ranging sensors determine ranging points on the lower plane of the to-be-swapped battery. That is, based on the position of the battery swapping device and the measurement direction of a ranging sensor, the ranging sensor actually measures the distance between the lower plane of the to-be-swapped battery and the ranging sensor.

It can be understood that each ranging sensor can obtain a ranging value. In this way, with at least three ranging sensors, the control device can obtain at least three ranging values.

A2. Calculate the posture information of the to-be-swapped battery based on the ranging values and the position information of the ranging sensors.

The position information of a ranging sensor may include the distance between the ranging sensor and other ranging sensors or the coordinate information of the ranging sensor in the plane coordinate system of the upper plane of the battery swapping device, which is not limited in this embodiment of this application. Based on the position information of the ranging sensors and the ranging values measured by the ranging sensors, the control device can calculate the angle between the lower plane of the to-be-swapped battery and the upper plane of the initial battery swapping device, thereby acquiring the posture information of the to-be-swapped battery.

To reduce computational load while lowering hardware costs, three ranging sensors may be provided. In this case, the control device can calculate the posture information of the to-be-swapped battery based on the ranging values and the position information of the ranging sensors as follows.

B1. Determine coordinates of each ranging point on the lower plane of the to-be-swapped battery in a specified coordinate system based on the ranging values measured by the ranging sensors and the position information of the ranging sensor.

The specified coordinate system is a spatial coordinate system established based on the upper plane of the battery swapping device and any one of the ranging sensors. It can be understood that the specified coordinate system is established by: first creating a plane coordinate system on the upper plane of the battery swapping device, with any one of the ranging sensors as the origin; then adding a Z-axis perpendicular to this plane coordinate system (that is, taking the measurement direction of the ranging sensor corresponding to the origin as the Z-axis). The spatial coordinate system obtained in this way is viewed as the specified coordinate system. It can be understood that the upper plane of the initial battery swapping device is actually the XY plane of the specified coordinate system. That is, the angle between the lower plane of the to-be-swapped battery and the upper plane of the initial battery swapping device refers to the angle between the lower plane of the to-be-swapped battery and the XY plane.

The position information of each ranging sensor is known, and the specified coordinate system is a spatial coordinate system established based on the upper plane of the battery swapping device and any one of the ranging sensors. Therefore, the control device can determine the coordinates of all ranging sensors in the specified coordinate system based on the position information of all ranging sensors (where the Z-coordinate of each ranging sensor is 0). Since the Z-axis of the specified coordinate system is parallel to the measurement direction of each of the ranging sensors, the coordinates of the ranging point corresponding to a ranging sensor in the specified coordinate system can be obtained by replacing the Z-coordinate 0 of the ranging sensor with the corresponding ranging value.

In some embodiments, for ease of calculation, a position distribution of the three ranging sensors on the upper plane of the battery swapping device may form a right triangle. That is, during hardware structure design for the battery swapping device, the positions of the ranging sensors on the upper plane of the battery swapping device may be set based on the position distribution of a right triangle.

In some embodiments, to improve the accuracy of posture detection, a distance between any two of the ranging sensors may be greater than a predetermined distance, where the predetermined distance is set based on a side length of the upper plane of the battery swapping device. As an example only, the predetermined distance may be half the length of the short side of the upper plane of the battery swapping device. Certainly, the predetermined distance may also be set in other ways, which is not limited herein.

B2. Calculate a normal vector of the lower plane of the to-be-swapped battery in the specified coordinate system based on the coordinates of the ranging points in the specified coordinate system.

Three ranging points can be grouped in pairs to form three vectors. The control device can arbitrarily select two vectors from these three vectors to calculate the normal vector of the lower plane of the to-be-swapped battery in the specified coordinate system. For ease of explanation, the two vectors used to calculate the normal vector may be denoted as a first vector and a second vector respectively, so that a dot product of the first vector and the normal vector is zero, and a dot product of the second vector and the normal vector is also zero. Since the coordinates of the three ranging points in the specified coordinate system are known, the first vector and the second vector can be obtained based on these coordinates, and the normal vector can be further calculated based on them. The normal vector of the upper plane of the initial battery swapping device can be expressed as the unit vector of the Z-axis in the specified coordinate system. Therefore, the posture information of the to-be-swapped battery (that is, the angle between the lower plane of the to-be-swapped battery and the XY plane) can be represented by the unit vector and the normal vector calculated in this step.

It should be noted that during the process of adjusting the posture of the battery swapping device, the specified coordinate system remains unchanged in space. It can be understood that the posture of the battery swapping device matching the posture information of the to-be-swapped battery means that the upper plane of the battery swapping device is parallel to the lower plane of the to-be-swapped battery. Therefore, in step 103, the angle between the lower plane of the to-be-swapped battery and the upper plane of the initial battery swapping device can be determined based on the normal vector of the lower plane of the to-be-swapped battery and the normal vector of the upper plane of the initial battery swapping device (that is, the unit vector of the Z-axis). The control device can then adjust the posture of the battery swapping device accordingly. During this adjustment process, the normal vector of the lower plane of the to-be-swapped battery remains unchanged, but the normal vector of the upper plane of the battery swapping device is continuously updated due to the adjustment. When the normal vector of the upper plane of the battery swapping device is adjusted to be parallel or nearly parallel to the normal vector of the lower plane of the to-be-swapped battery, it can be determined that the upper plane of the battery swapping device is parallel or nearly parallel to the lower plane of the to-be-swapped battery. That is, the posture of the battery swapping device has matched the posture information of the to-be-swapped battery. During the process of adjusting the posture of the battery swapping device, the ranging sensor corresponding to the origin can be used as the central point for adjustment (that is, this ranging sensor can be the pivot for adjustment) to avoid changes in its spatial position, thereby achieving orderly adjustment of the posture of the battery swapping device.

Certainly, during the process of adjusting the posture of the battery swapping device, the control device may alternatively determine in other ways whether the posture of the battery swapping device matches the posture information of the to-be-swapped battery. For example, it may be determined that the posture of the battery swapping device matches the posture information of the to-be-swapped battery when the ranging values measured by the ranging sensors are equal, which is not further elaborated in this embodiment of this application.

Referring to FIG. 2, FIG. 2 illustrates the acquisition of posture information of the to-be-swapped battery via ranging sensors under the initial posture of the battery swapping device. As shown in FIG. 2, black dots a, b, and c represent the three ranging sensors arranged on the upper plane of the battery swapping device, where ab and ac form a right angle. That is, ranging sensors a, b, and c form a right triangle with ∠a as the right angle. Black dots a', b', and c' represent the corresponding ranging points when ranging sensors a, b, and c measure the lower plane of the to-be-swapped battery. Here, h1, h2, and h3 represent the ranging values of ranging sensors a, b, and c respectively, that is, the distances between the ranging sensors a, b, and c and their corresponding ranging points a', b', and c'. The distance between ranging sensors a and b is L1, the distance between ranging sensors a and c is L2, and the distance between ranging sensors b and c is L3.

With ranging sensor a as the coordinate origin, the direction from ranging sensor a to ranging sensor b as the positive Y-axis, the direction from ranging sensor a to ranging sensor c as the positive X-axis, and the measurement direction of ranging sensor a as the positive Z-axis, a specified coordinate system is constructed. In this case, the coordinates of ranging sensor a are (0,0,0), the coordinates of ranging sensor b are (0,L1,0), the coordinates of ranging sensor c are (L2,0,0), the coordinates of ranging point a' are (0,0,h1), the coordinates of ranging point b' are (0,L1,h2), and the coordinates of ranging point c' are (L2,0,h3).

The plane formed by ranging points a', b', and c' is the lower plane of the to-be-swapped battery. Based on the coordinates of ranging points a', b', and c', the vector *̅a̅*̅'̅*̅b̅*̅'̅ is (0,L1,h2-h1), and the vector *̅a̅*̅'̅*̅c̅*̅'̅ is (L2,0,h3-h1). With the normal vector of the lower plane of the to-be-swapped battery denoted as *̅n̅*̅ , *̅n̅*̅ can be calculated based on *̅n̅*̅ · *̅a̅*̅'̅*̅b̅*̅'̅ =0 and *̅n̅*̅ · *̅a̅*̅'̅*̅c̅*̅'̅ =0.

In another application scenario, to minimize the hardware costs of the battery swapping device, the ranging sensor may be provided in a quantity of one. The measurement direction of this ranging sensor is not fixed, that is, its measurement direction can be controlled and adjusted. To ensure the accuracy of the measurement results, the measurement error of the ranging sensor may be on the millimeter level. Using the ranging sensor arranged in this manner, the control device can measure the posture of the to-be-swapped battery as follows.

C1. Control the ranging sensor to measure a lower plane of the to-be-swapped battery in at least three different ranging directions to obtain at least three ranging values.

To ensure the accuracy and precision of the measurement, any three different ranging directions should not be in the same plane. This ensures that the ranging points corresponding to any three different ranging directions on the lower plane of the to-be-swapped battery are not collinear. That is, the ranging points formed in this way can fully and accurately represent the lower plane of the to-be-swapped battery.

C2. Calculate the posture information of the to-be-swapped battery based on the ranging values, the ranging directions corresponding to the ranging values, and position information of the ranging sensor.

Similar to the forgoing descriptions, the control device can establish a specified coordinate system, which is still a spatial coordinate system established based on the upper plane of the initial battery swapping device and the ranging sensor. Therefore, the ranging sensor is located at the origin of the specified coordinate system. Based on the ranging values and the ranging directions corresponding to the ranging values, the control device can determine the coordinates of the ranging points corresponding to the ranging directions depending on spatial geometry knowledge. Based on the coordinates of the ranging points, the control device can calculate the normal vector of the lower plane of the to-be-swapped battery to represent the posture information of the to-be-swapped battery, which is not repeated herein.

As described above, in this embodiment of this application, to accurately perform battery swapping operations for batteries with different postures, the control device may first control the battery swapping device to move to the projection area on the ground of the to-be-swapped battery of the target equipment, positioning the battery swapping device directly below the to-be-swapped battery. This enables the battery swapping device to effectively observe the to-be-swapped battery from directly below, thereby acquiring the posture information of the to-be-swapped battery. Finally, the control device adjusts the posture of the battery swapping device based on the posture information of the to-be-swapped battery, so that the posture of the battery swapping device can match the posture information of the to-be-swapped battery, that is, the posture of the battery swapping device matches the posture of the to-be-swapped battery. When their postures match, the battery swapping device can smoothly dock with the to-be-swapped battery, achieving rapid removal and replacement of the to-be-swapped battery. Through the foregoing process, regardless of the posture of the to-be-swapped battery on the target equipment, the battery swapping device of the battery swapping station can perform replacement operations, achieving compatible battery replacement for different electric vehicles.

It should be understood that the numbering of the steps in the foregoing embodiment does not imply the order of execution, and the execution order of each process should be determined by its purpose and internal logic, without constituting any limitation on the implementation process of this embodiment of this application.

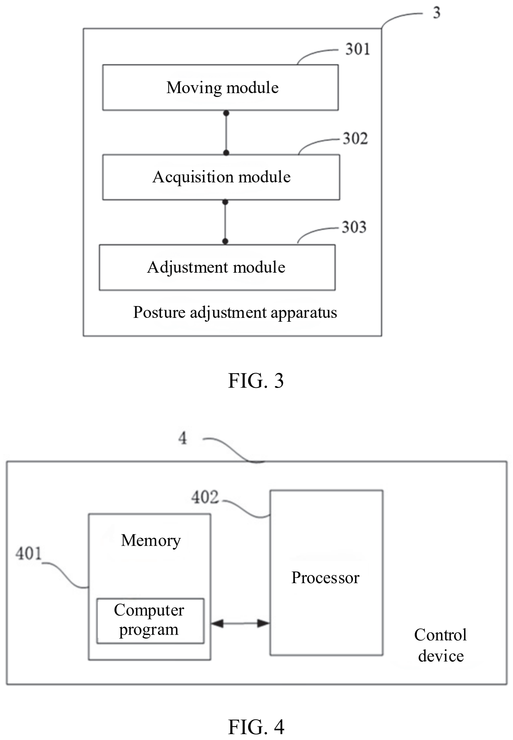

Corresponding to the foregoing posture adjustment method, an embodiment of this application further provides a posture adjustment apparatus. Referring to FIG. 3, a posture adjustment apparatus 3 in this embodiment of this application includes:
a moving module 301, configured to control a battery swapping device to move to a projection area on the ground of a to-be-swapped battery of target equipment;
an acquisition module 302, configured to acquire posture information of the to-be-swapped battery via a ranging sensor on the battery swapping device; and
an adjustment module 303, configured to adjust a posture of the battery swapping device based on the posture information of the to-be-swapped battery until the posture of the battery swapping device matches the posture information of the to-be-swapped battery.

In some embodiments, the ranging sensor is arranged on a plane other than a lower plane of the battery swapping device.

In some embodiments, the ranging sensor is provided in a quantity of at least three, all ranging sensors are arranged on an upper plane of the battery swapping device, and a measurement direction of each of the ranging sensors is perpendicular to the upper plane of the battery swapping device. The acquisition module 302 includes:
a first measurement unit, configured to obtain at least three ranging values by using the ranging sensors to measure the lower plane of the to-be-swapped battery; and
a first calculation unit, configured to calculate the posture information of the to-be-swapped battery based on the ranging values and position information of the ranging sensors.

In some embodiments, the calculation unit includes:
a coordinate determining subunit, configured to, when the ranging sensor is provided in a quantity of three, determine coordinates of ranging points on the lower plane of the to-be-swapped battery in a specified coordinate system based on the ranging values corresponding to the ranging sensors and the position information of the ranging sensors, where the specified coordinate system is a spatial coordinate system established based on the upper plane of the battery swapping device and any one of the ranging sensors; and
a normal vector calculation subunit, configured to calculate the normal vector of the lower plane of the to-be-swapped battery in the specified coordinate system based on the coordinates of the ranging points in the specified coordinate system, where the normal vector is used to represent the posture information of the to-be-swapped battery.

In some embodiments, when the ranging sensor is provided in a quantity of three, a position distribution of the ranging sensors on the upper plane of the battery swapping device forms a right triangle.

In some embodiments, when the ranging sensor is provided in a quantity of three, a distance between any two of the ranging sensors is greater than a predetermined distance, where the predetermined distance is set based on a side length of the upper plane of the battery swapping device.

In some embodiments, the ranging sensor is provided in a quantity of one, and the acquisition module 302 includes:
a second measurement unit, configured to control the ranging sensor to measure a lower plane of the to-be-swapped battery in at least three different ranging directions to obtain at least three ranging values; and
a second calculation unit, configured to calculate the posture information of the to-be-swapped battery based on the ranging values, the ranging directions corresponding to the ranging values, and posture information of the ranging sensor.

As described above, in this embodiment of this application, to accurately perform battery swapping operations for batteries with different postures, the posture adjustment apparatus may first control the battery swapping device to move to the projection area on the ground of the to-be-swapped battery of the target equipment, positioning the battery swapping device directly below the to-be-swapped battery. This enables the battery swapping device to effectively observe the to-be-swapped battery from directly below through its ranging sensor, thereby acquiring the posture information of the to-be-swapped battery. Finally, the posture adjustment apparatus adjusts the posture of the battery swapping device based on the posture information of the to-be-swapped battery, so that the posture of the battery swapping device can match the posture information of the to-be-swapped battery, that is, the posture of the battery swapping device matches the posture of the to-be-swapped battery. When their postures match, the battery swapping device can smoothly dock with the to-be-swapped battery, achieving rapid removal and replacement of the to-be-swapped battery. Through the foregoing process, regardless of the posture of the to-be-swapped battery on the target equipment, the battery swapping device of the battery swapping station can perform replacement operations, achieving compatible battery replacement for different electric vehicles.

Corresponding to the foregoing posture adjustment method, an embodiment of this application further provides a control device. Referring to FIG. 4, a control device 4 in this embodiment of this application includes: a memory 401, one or more processors 402 (only one shown in FIG. 4), and a computer program stored in the memory 401 and capable of running on the processor. The memory 401 is configured to store software programs and modules, and the processor 402 executes various functional applications and data processing by running the software programs and units stored in the memory 401 to acquire resources corresponding to the predetermined events. Specifically, the processor 402 implements the following steps by running the computer program stored in the memory 401:
controlling a battery swapping device to move to a projection area on the ground of a to-be-swapped battery of target equipment;
acquiring posture information of the to-be-swapped battery via a ranging sensor on the battery swapping device; and
adjusting a posture of the battery swapping device based on the posture information of the to-be-swapped battery until the posture of the battery swapping device matches the posture information of the to-be-swapped battery.

Assuming that the foregoing is a first possible implementation, in a second possible implementation based on the first possible implementation, the ranging sensor is arranged on a plane other than a lower plane of the battery swapping device.

In a third possible implementation based on the second possible implementation, the ranging sensor is provided in a quantity of at least three, all the ranging sensors are arranged on an upper plane of the battery swapping device, and a measurement direction of each of the ranging sensors is perpendicular to the upper plane of the battery swapping device. The acquiring posture of the to-be-swapped battery via a ranging sensor on the battery swapping device includes:
obtaining at least three ranging values by using the ranging sensors to measure the lower plane of the to-be-swapped battery; and
calculating the posture information of the to-be-swapped battery based on the ranging values and position information of the ranging sensors.

In a fourth possible implementation based on the third possible implementation, when the ranging sensor is provided in a quantity of three, the calculating the posture information of the to-be-swapped battery based on the ranging values and position information of the ranging sensors includes:
determining coordinates of each ranging point on the lower plane of the to-be-swapped battery in a specified coordinate system based on the ranging values measured by the ranging sensors and the position information of the ranging sensors, where the specified coordinate system is a spatial coordinate system established based on the upper plane of the battery swapping device and any one of the ranging sensors; and
calculating a normal vector of the lower plane of the to-be-swapped battery in the specified coordinate system based on the coordinates of the ranging points in the specified coordinate system, where the normal vector is used to represent the posture information of the to-be-swapped battery.

In a fifth possible implementation based on the third or fourth possible implementation, when the ranging sensor is provided in a quantity of three, a position distribution of the ranging sensors on the upper plane of the battery swapping device forms a right triangle.

In a sixth possible implementation based on the third or fourth possible implementation, when the ranging sensor is provided in a quantity of three, a distance between any two of the ranging sensors is greater than a predetermined distance, where the predetermined distance is set based on a side length of the upper plane of the battery swapping device.

In a seventh possible implementation based on the second possible implementation, the ranging sensor is provided in a quantity of one, and the acquiring posture information of the to-be-swapped battery via a ranging sensor on the battery swapping device includes:
controlling the ranging sensor to measure a lower plane of the to-be-swapped battery in at least three different ranging directions to obtain at least three ranging values; and
calculating the posture information of the to-be-swapped battery based on the ranging values, the ranging directions corresponding to the ranging values, and position information of the ranging sensor.

It should be understood that in this embodiment of this application, the processor 402 may be a central processing unit (Central Processing Unit, CPU), or the processor may alternatively be another general-purpose processor, a digital signal processing (Digital Signal Processing, DSP), an application specific integrated circuit (Application Specific Integrated Circuit, ASIC), a field-programmable gate array (Field-Programmable Gate Array, FPGA) or another programmable logic device, a discrete gate or transistor logic device, or a discrete hardware component. The general-purpose processor may be a microprocessor, or the processor may be any conventional processor or the like.

The memory 401 may include a read-only memory and a random access memory and provides instructions and data for the processor 402. Part or all of the memory 401 may further include a non-volatile random access memory. For example, the memory 401 may also store information about device types.

As described above, in this embodiment of this application, to accurately perform battery swapping operations for batteries with different postures, the control device may first control the battery swapping device to move to the projection area on the ground of the to-be-swapped battery of the target equipment, positioning the battery swapping device directly below the to-be-swapped battery. This enables the battery swapping device to effectively observe the to-be-swapped battery from directly below through its ranging sensor, thereby acquiring the posture information of the to-be-swapped battery. Finally, the control device adjusts the posture of the battery swapping device based on the posture information of the to-be-swapped battery, so that the posture of the battery swapping device can match the posture information of the to-be-swapped battery, that is, the posture of the battery swapping device matches the posture of the to-be-swapped battery. When their postures match, the battery swapping device can smoothly dock with the to-be-swapped battery, achieving rapid removal and replacement of the to-be-swapped battery. Through the foregoing process, regardless of the posture of the to-be-swapped battery on the target equipment, the battery swapping device of the battery swapping station can perform replacement operations, achieving compatible battery replacement for different electric vehicles.

Persons skilled in the art can clearly realize that, for ease and brevity of description, only division into the foregoing functional units or modules is used as an example for description. In actual application, the foregoing functions may be allocated, based on needs, to different functional units or modules for implementation. That is, an internal structure of the apparatus is divided into different functional units or modules to implement all or some of the functions described above. Functional units or modules in the embodiments of this application may be integrated into one processing unit, or each of the units may exist alone physically, or two or more units may be integrated into one unit. The integrated unit may be implemented in the form of hardware or may be implemented in a form of a software function unit. In addition, the specific names of functional units and modules are merely intended for distinguishing each other rather than limiting the protection scope of this application. The specific operation processes of the units or modules in the foregoing system can be learned with reference to the corresponding processes in the foregoing method embodiments and will not be described herein again.

In the foregoing embodiments, the description of each embodiment has its own emphasis. Content that is not described in detail or recorded in an embodiment can be learned with reference to relevant descriptions of other embodiments.

A person of ordinary skill in the art may realize that units and algorithm steps of various examples described with reference to the embodiments disclosed in this specification can be implemented by using electronic hardware or a combination of external device software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

In the embodiments provided in this application, it should be understood that the disclosed apparatus and method may be implemented in other manners. For example, the system embodiments described above are merely illustrative. The system embodiment described above is merely an example. For example, such division of modules or units is merely a logical function division, and another division manner may be used during actual implementation. For another example, a plurality of units or components may be combined, or may be integrated into another system, or some features may be ignored or not performed. In addition, the displayed or discussed mutual couplings or direct couplings or communication connections may be implemented via some interfaces. The indirect couplings or communication connections between apparatuses or units may be implemented in electrical, mechanical, or other forms.

The units described as separate components may or may not be physically separate. A component displayed as a unit may or may not be a physical unit, that is, it may be located in one place or may be distributed in a plurality of network units. Some or all of the units may be selected based on an actual requirement, to achieve the objectives of the solutions in the embodiments.

If the integrated unit is implemented in the form of a software function unit and is sold or used as an independent product, the integrated unit may be stored in a readable storage medium. Based on this understanding, all or part of the processes of the method in the embodiments of this application may be implemented by a computer program instructing related hardware. The computer program may be stored in the computer-readable storage medium, and when the computer program is executed by a processor, the steps in the foregoing method embodiments may be implemented. The computer program includes computer program code, where the computer program code may be source code, object code, an executable file, some intermediate forms, or the like. The computer-readable medium may include: any entity or apparatus capable of carrying the computer program code, a recording medium, a USB flash disk, a mobile hard disk, a diskette, a compact disc, a computer-readable memory, a read-only memory (ROM, Read-Only Memory), a random access memory (RAM, Random Access Memory), a carrier signal, a telecommunications signal, a software distribution medium, or the like. It should be noted that the content included in the computer-readable storage medium may be appropriately added or removed as required by legislation and patent practice in the jurisdiction. For example, in some jurisdictions, according to legislation and patent practice, the computer-readable storage medium does not include carrier signals and telecommunications signals.

The foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of this application but falling within the protection scope of this application.

## Claims

1. A posture adjustment method, comprising:
controlling a battery swapping device to move to a ground projection area of a to-be-swapped battery of target equipment;
acquiring posture information of the to-be-swapped battery via a ranging sensor on the battery swapping device; and
adjusting a posture of the battery swapping device based on the posture information of the to-be-swapped battery until the posture of the battery swapping device matches the posture information of the to-be-swapped battery.

2. The posture adjustment method according to claim 1, wherein the ranging sensor is arranged on a plane other than a lower plane of the battery swapping device.

3. The posture adjustment method according to claim 2, wherein:
the battery swapping device is provided with at least three ranging sensors, wherein all the ranging sensors are arranged on an upper plane of the battery swapping device, and a measurement direction of each of the ranging sensors is perpendicular to the upper plane of the battery swapping device; and
the acquiring posture information of the to-be-swapped battery via a ranging sensor on the battery swapping device comprises:
obtaining at least three ranging values by using the ranging sensors to measure a lower plane of the to-be-swapped battery; and
calculating the posture information of the to-be-swapped battery based on the ranging values and position information of the ranging sensors.

4. The posture adjustment method according to claim 3, wherein when the battery swapping device is provided with three ranging sensors, the calculating the posture information of the to-be-swapped battery based on the ranging values and position information of the ranging sensors comprises:
determining coordinates of each ranging point on the lower plane of the to-be-swapped battery in a specified coordinate system based on the ranging values measured by the ranging sensors and the position information of the ranging sensors, wherein the specified coordinate system is a spatial coordinate system established based on the upper plane of the battery swapping device and any one of the ranging sensors; and
calculating a normal vector of the lower plane of the to-be-swapped battery in the specified coordinate system based on the coordinates of the ranging points in the specified coordinate system, wherein the normal vector is used to represent the posture information of the to-be-swapped battery.

5. The posture adjustment method according to claim 3 or 4, wherein when the battery swapping device is provided with three ranging sensors, a position distribution of the ranging sensors on the upper plane of the battery swapping device forms a right triangle.

6. The posture adjustment method according to claim 3 or 4, wherein when the battery swapping device is provided with three ranging sensors, a distance between any two of the ranging sensors is greater than a predetermined distance, wherein the predetermined distance is set based on a side length of the upper plane of the battery swapping device.

7. The posture adjustment method according to claim 2, wherein the battery swapping device is provided with one ranging sensor, and the acquiring posture information of the to-be-swapped battery via a ranging sensor on the battery swapping device comprises:
controlling the ranging sensor to measure a lower plane of the to-be-swapped battery in at least three different ranging directions to obtain at least three ranging values; and
calculating the posture information of the to-be-swapped battery based on the ranging values, the ranging directions corresponding to the ranging values, and position information of the ranging sensor.

8. A posture adjustment apparatus, comprising:
a moving module, configured to control a battery swapping device to move to a ground projection area of a to-be-swapped battery of target equipment;
an acquisition module, configured to acquire posture information of the to-be-swapped battery via a ranging sensor on the battery swapping device; and
an adjustment module, configured to adjust a posture of the battery swapping device based on the posture information of the to-be-swapped battery until the posture of the battery swapping device matches the posture information of the to-be-swapped battery.

9. A control device, comprising a memory, a processor, and a computer program stored in the memory and executable by the processor, wherein when the computer program is executed by the processor, the method according to any one of claims 1 to 7 is implemented.

10. A computer-readable storage medium, having a computer program stored thereon, wherein when the computer program is executed by a processor, the method according to any one of claims 1 to 7 is implemented.
